# EUROPEAN PATENT APPLICATION

(11) **EP 4 411 938 A1**
(43) Date of publication of application: **07.08.2024**
(21) Application number: 23778059.8
(22) Date of filing: 24.03.2023
(51) Int. Cl.: H01M 10/613, H01M 10/6557, H01M 10/6567, H01M 10/6568

(54) **COLD PLATE ASSEMBLY, WATER COOLING SYSTEM, BATTERY AND BOX BODY THEREOF, AND ELECTRIC DEVICE**

(30) Priority: 30.03.2022 CN 202210328685
(71) Applicant: Contemporary Amperex Technology Co., Limited, Ningde, Fujian 352100 (CN)
(72) Inventor: SONG, Feiting, Ningde, Fujian 352100 (CN); HOU, Yuepan, Ningde, Fujian 352100 (CN); HUANG, Xiaoteng, Ningde, Fujian 352100 (CN); ZHOU, Cong, Ningde, Fujian 352100 (CN)
(74) Representative: Gong, Jinping
(86) International application number: PCT/CN2023/083843
(87) International publication number: WO 2023/185691

(57) **Abstract**

This application provides a water cooling plate assembly, a water cooling system, a battery, a battery box, and an electrical device. The water cooling plate assembly of this application includes: a harmonica reed plate, a first current collector, and a second current collector. The first current collector is disposed at a first end of the harmonica reed plate in the length direction. A first current collecting space communicating with a port at one end of the plurality of cooling channels is formed in the first current collector. A first liquid inlet and a first liquid outlet through which the cooling liquid flows into and out of the first collecting space respectively are formed on the first current collector on two sides in a thickness direction of the harmonica reed plate respectively. The second current collector is disposed at a second end of the harmonica reed plate in the length direction. The second end is opposite to the first end. A second current collecting space communicating with a port at another end of the plurality of cooling channels is formed in the second current collector. A second liquid inlet and a second liquid outlet through which the cooling liquid flows into and out of the second collecting space respectively are formed on the second current collector on two sides in the thickness direction of the harmonica reed plate respectively.

## Description

### CROSS-REFERENCE TO RELATED APPLICATIONS

This application claims priority to Chinese Patent Application No. 202210328685.7, filed on March 30, 2022 and entitled "WATER COOLING PLATE ASSEMBLY, WATER COOLING SYSTEM, BATTERY, BATTERY BOX, AND ELECTRICAL DEVICE", which is incorporated herein by reference in its entirety.

### TECHNICAL FIELD

This application relates to the field of battery technology, and in particular, to a water cooling plate assembly, a water cooling system, a battery, a battery box, and an electrical device.

### BACKGROUND

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

During use of a battery, a battery cell in the battery generates heat. If the heat is unduly high, the heat will adversely affect the performance and service life of the battery. Therefore, how to effectively dissipate heat for the battery cells of the battery has become an important research topic in this field.

This application aims to solve at least one of the technical problems in the related art. An objective of this application is to disclose a water cooling plate assembly to improve the cooling effect for a battery cell in a battery.

An embodiment in a first aspect of this application provides a water cooling plate assembly, including: a harmonica reed plate, where a plurality of cooling channels extending along a length direction of the harmonica reed plate are formed inside the harmonica reed plate, and the plurality of cooling channels are arranged in parallel along a width direction of the harmonica reed plate so as to be available for being flowed through by a cooling liquid; a first current collector, disposed at a first end of the harmonica reed plate in the length direction, where a first current collecting space communicating with a port at one end of the plurality of cooling channels is formed in the first current collector, and a first liquid inlet and a first liquid outlet through which the cooling liquid flows into and out of the first collecting space respectively are formed on the first current collector on two sides in a thickness direction of the harmonica reed plate respectively; and a second current collector, disposed at a second end of the harmonica reed plate in the length direction, where the second end is opposite to the first end, a second current collecting space communicating with a port at another end of the plurality of cooling channels is formed in the second current collector, and a second liquid inlet and a second liquid outlet through which the cooling liquid flows into and out of the second collecting space respectively are formed on the second current collector on two sides in the thickness direction of the harmonica reed plate respectively.

In the technical solution in this embodiment of this application, both the liquid inlet and the liquid outlet of the water cooling plate assembly are disposed on the two sides of the water cooling plate assembly in the thickness direction of the harmonica reed plate. Therefore, when a plurality of water cooling plate assemblies are assembled to form a water cooling system, the harmonica reed plates of a plurality of water cooling plate assemblies are allowed to be assembled in parallel and at intervals by virtue of the unique positions of the liquid inlet and liquid outlet of each water cooling plate assembly. In this way, the battery cell containing an electrode assembly can be placed between two adjacent water cooling plate assemblies arranged in parallel and at intervals to cool both lateral faces of the battery cell. Such an arrangement can improve the cooling efficiency of the battery cells, and achieve a cooling effect that is balanced between the upper part and the lower part of the battery cells.

In some embodiments, a plurality of cooling channels form a plurality of cooling channel groups arranged along the width direction of the harmonica reed plate. Each of the plurality of cooling channel groups includes at least one cooling channel. The first current collector includes a first spacer disposed in the first current collecting space. The second current collector includes a second spacer disposed in the second current collecting space. The first spacer and the second spacer are configured to enable series connection of the plurality of cooling channel groups.

A plurality of cooling channel groups are connected in series. In this way, a plurality of cooling channels constitute a longer cooling channel that provides a plurality of round-trip paths. Therefore, more time is available for the cooling liquid flowing through the harmonica reed plate to exchange heat with the battery cells, thereby improving the heat dissipation efficiency. In addition, a plurality of cooling channel groups are connected in series to allow the cooling liquid to reciprocate repeatedly in the harmonica reed plate, so that the temperature is relatively balanced between the ports at the two ends of the harmonica reed plate.

In some embodiments, the plurality of cooling channel groups include a first cooling channel group, a second cooling channel group, and a third cooling channel group arranged sequentially along the width direction of the harmonica reed plate. The first spacer is configured to partition off a port of the first cooling channel group from ports of other cooling channels among the plurality of cooling channels except the first cooling channel group. The second spacer is configured to partition off a port of the third cooling channel group from ports of other cooling channels among the plurality of cooling channels except the third cooling channel group, so as to enable series connection of the first cooling channel group, the second cooling channel group, and the third cooling channel group.

Three cooling channel groups are connected in series to allow the cooling liquid to reciprocate along an S-shaped route in the harmonica reed plate, so that the temperature is relatively balanced between the ports at the two ends of the harmonica reed plate.

In some embodiments, the first current collector further includes: a first current collecting sheet and a second current collecting sheet arranged in parallel in a thickness direction of the harmonica reed plate. The first current collecting sheet and the second current collecting sheet are raised in two opposite directions respectively. The second current collector further includes: a third current collecting sheet and a fourth current collecting sheet arranged in parallel in the thickness direction of the harmonica reed plate. The third current collecting sheet and the fourth current collecting sheet are raised in two opposite directions respectively. At least a part of edges of the first current collecting sheet and the second current collecting sheet are bonded together so that the raised parts of the first current collecting sheet and the second current collecting sheet define the first current collecting space. At least a part of edges of the third current collecting sheet and the fourth collecting sheet are bonded together so that the raised parts of the third current collecting sheet and the fourth collecting sheet define the second current collecting space.

The first current collecting sheet and the second current collecting sheet each are combined from two current collecting sheets. The raised part on the current collecting sheet may be formed by simple stamping. Therefore, the structures of the first current collecting sheet and the second current collecting sheet are relatively simple, and easy to manufacture.

In some embodiments, the first liquid inlet and the first liquid outlet are disposed on the first current collecting sheet and the second current collecting sheet respectively, and the second liquid inlet and the second liquid outlet are disposed on the third current collecting sheet and the fourth current collecting sheet respectively.

With the first liquid inlet and the first liquid outlet being disposed on the first current collecting sheet and the second current collecting sheet respectively, it is convenient to align the first liquid inlet and the first liquid outlet in a height direction of the first current collector. Similarly, with the second liquid inlet and the second liquid outlet being disposed on the third current collecting sheet and the fourth current collecting sheet respectively, it is convenient to align the second liquid inlet and the second liquid outlet in a height direction of the second current collector.

In some embodiments, projections of the first liquid inlet and the first liquid outlet on a reference plane coincide with each other, where the reference plane is a plane parallel to two lateral faces of the harmonica reed plate in the thickness direction. Projections of the second liquid inlet and the second liquid outlet on the reference plane coincide with each other.

In this way, when a plurality of water cooling plate assemblies are assembled to form a water cooling system, the liquid inlets and the liquid outlets of the two adjacent water cooling plate assemblies are at the same level of height, thereby facilitating connection between the two adjacent water cooling plate assemblies.

In some embodiments, at least a part of an edge of the first current collecting sheet and at least a part of an edge of the second current collecting sheet are bonded by welding. At least a part of an edge of the third current collecting sheet and at least a part of an edge of the fourth current collecting sheet are bonded by welding.

The welding achieves higher firmness of the bonding between the first current collecting sheet and the second current collecting sheet as well as the bonding between the third current collecting sheet and the fourth current collecting sheet.

In some embodiments, at least a part of an edge of the first current collecting sheet and at least a part of an edge of the second current collecting sheet are bonded by snap-fitting; and at least a part of an edge of the third current collecting sheet and at least a part of an edge of the fourth current collecting sheet are bonded by snap-fitting.

The snap-fit bonding facilitates fast and simple bonding between the first current collecting sheet and the second current collecting sheet, and between the third current collecting sheet and the fourth current collecting sheet.

In some embodiments, a plurality of first snap slots are disposed at the edge of the first current collecting sheet. A plurality of first buckles are disposed in corresponding positions at the edge of the second current collecting sheet. The first snap slots and the corresponding first buckles are mated to implement snap-bonding between the first current collecting sheet and the second current collecting sheet. A plurality of second snap slots are disposed at the edge of the third current collecting sheet. A plurality of second buckles are disposed in corresponding positions at the edge of the fourth current collecting sheet. The second snap slots and the corresponding second buckles are mated to implement snap-bonding between the third current collecting sheet and the fourth current collecting sheet.

The plurality of first buckles and first snap slots as well as the plurality of second buckles and second snap slots increase the connection strength between the current collecting sheets. At the same time, the buckles and snap slots disposed at the corresponding positions of the two current collecting sheets facilitate alignment between the two current collecting sheets.

In some embodiments, a positioning portion is disposed on one or more of the first current collecting sheet, the second current collecting sheet, the third current collecting sheet, or the fourth current collecting sheet, and is configured to align the water cooling plate assembly with other water cooling plate assemblies during mounting of the water cooling plate assembly.

In assembling a plurality of water cooling plate assemblies, the plurality of water cooling plate assemblies may be aligned with each other in the height direction with reference to the positioning portion of each water cooling plate assembly.

In some embodiments, in a case that the first current collector includes a first spacer disposed in the first current collecting space and the plurality of cooling channel groups include a first cooling channel group, a second cooling channel group, and a third cooling channel group arranged sequentially along the width direction of the harmonica reed plate, the first spacer further includes: a first connecting section, extending along at least a part of the edges of the first current collecting sheet and the second current collecting sheet and fixed to an inner side of the edges of the first current collecting sheet and the second current collecting sheet; a first arc-shaped section, extending along at least a part of the edges of the first liquid inlet and the first liquid outlet to avoid the first liquid inlet and the first liquid outlet; and a second connecting section, connected to an edge of the first end of the harmonica reed plate, and fixed between a port of the first cooling channel group and a port of the second cooling channel group.

A part of the first spacer is designed as an extending structure that includes three sections, thereby effectively partitioning the first current collecting space into two independent sub-spaces, and avoiding obstruction of the cooling liquid entering and exiting the first current collecting space.

In some embodiments, in a case that the second current collector includes a second spacer disposed in the second current collecting space and the plurality of cooling channel groups include a first cooling channel group, a second cooling channel group, and a third cooling channel group arranged sequentially along the width direction of the harmonica reed plate, the second spacer further includes: a third connecting section, extending along at least a part of the edges of the third current collecting sheet and the fourth current collecting sheet and fixed to an inner side of the edges of the third current collecting sheet and the fourth current collecting sheet; a second arc-shaped section, extending along at least a part of the edges of the second liquid inlet and the second liquid outlet to avoid the second liquid inlet and the second liquid outlet; and a fourth connecting section, connected to an edge of the second end of the harmonica reed plate, and fixed between a port of the third cooling channel group and a port of the second cooling channel group.

A part of the second spacer is designed as an extending structure that includes three sections, thereby effectively partitioning the second current collecting space into two independent sub-spaces, and avoiding obstruction of the cooling liquid entering and exiting the second current collecting space.

An embodiment in the second aspect of this application provides a water cooling system, including the water cooling plate assemblies described above. The plurality of water cooling plate assemblies are arranged in parallel at intervals. For any two adjacent water cooling plate assemblies among the plurality of water cooling plate assemblies: the first liquid inlet and the second liquid outlet of one of the two adjacent water cooling plate assemblies communicate with the first liquid outlet and the second liquid inlet of the other water cooling plate assembly respectively to implement connection between the two adjacent water cooling plate assemblies.

In the water cooling system of this embodiment, a cooling liquid circulation system is formed by connecting a plurality of water cooling plate assemblies, thereby facilitating the circulation of the cooling liquid in the system.

In some embodiments, the water cooling system further includes: a plurality of connecting pipes. Each of the plurality of connecting pipes is configured to communicate the first liquid inlets and the first liquid outlets of two adjacent water cooling plate assemblies, or configured to communicate the second liquid inlets and the second liquid outlets of two adjacent water cooling plate assemblies. The first liquid inlet, the second liquid inlet, the first liquid outlet, and the second liquid outlet of each water cooling plate assembly of the water cooling system form a flange protruding toward the outside of the water cooling plate assembly. The flange is inserted into a corresponding connecting pipe to implement connection between the first liquid inlet, the second liquid inlet, the first liquid outlet, or the second liquid outlet and the connecting pipe.

The connecting pipe connects the liquid inlets and outlets of the two adjacent water cooling plate assemblies, thereby increasing the connection strength between the water cooling plate assemblies, and also ensuring that a clearance between the adjacent water cooling plate assemblies is available for accommodating the battery cells.

An embodiment in a third aspect of this application provides a battery box. The box is configured to accommodate a battery cell and includes the water cooling plate assembly described above. The water cooling plate assembly abuts the battery cell to cool the battery cell.

An embodiment in a fourth aspect of this application provides a battery. The battery includes a battery cell and the battery box disclosed in the preceding embodiment. The box is configured to accommodate the battery cell.

An embodiment in a fifth aspect of this application provides a battery. The battery includes: the water cooling system according to the preceding embodiment; and a plurality of battery cells. At least some battery cells among the plurality of battery cells are disposed in a clearance between two adjacent water cooling plate assemblies of the water cooling system. Two opposite lateral faces of each battery cell among the at least some battery cells abut against the harmonica reed plates of the two adjacent water cooling plate assemblies respectively, so that the water cooling system cools the two opposite lateral faces of each battery cell.

In the battery of this embodiment, the two adjacent water cooling plate assemblies of the water cooling system can cool the two opposite lateral faces of each battery cell respectively, thereby improving the cooling efficiency for the battery cells, and also achieving a cooling effect that is balanced between the upper part and the lower part of the battery cells.

An embodiment in the sixth aspect of this application provides an electrical device. The electrical device includes the battery disclosed in the preceding embodiment. The battery is configured to provide electrical energy.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

Unless otherwise specified, the same reference numerals throughout a plurality of drawings represent the same or similar components or elements. The drawings are not necessarily drawn to scale. Understandably, the drawings merely depict some embodiments of this application, but are not to be intended as any limitation on the scope of this application.
FIG. 1 is a schematic structural diagram of a vehicle according to some embodiments of this application;
FIG. 2 is a schematic exploded view of a battery according to some embodiments of this application;
FIG. 3 is a schematic diagram of an assembled battery according to some embodiments of this application;
FIG. 4 is a schematic structural diagram of a water cooling plate assembly according to some embodiments of this application;
FIG. 5 is a schematic structural diagram of an end of a first current collector of a water cooling plate assembly according to some embodiments of this application;
FIG. 6 is a schematic structural diagram of an end of a second current collector of a water cooling plate assembly according to some embodiments of this application;
FIG. 7 is a schematic exploded view of a first current collector of a water cooling plate assembly according to some embodiments of this application;
FIG. 8 is a schematic structural diagram of a first spacer according to some embodiments of this application; and
FIG. 9 is a schematic structural diagram of a second spacer according to some embodiments of this application.

### List of reference numerals:

vehicle 1;
battery 10, controller 20, motor 30;
box 100, first part 110, second part 120, water cooling system 130;
battery cell 200;
Water cooling plate assembly 300; first current collector 310, second current collector 320, first liquid inlet 330, first liquid outlet 340, second liquid inlet 350; second liquid outlet 360; harmonica reed plate 370;
First cooling channel group 371, second cooling channel group 372, third cooling channel group 373;
first current collecting sheet 311, second current collecting sheet 312, first spacer 313;
first connecting section 313a, first arc-shaped section 313b, second connecting section 313c, first main portion 313d;
First snap slot 31 1a, first buckle 312b, first positioning hole 311c, second positioning hole 312c;
third current collecting sheet 321, fourth current collecting sheet 322, second spacer 323;
third connecting section 323a, second arc-shaped section 323b, fourth connecting section 323c, second main portion 323d;
connecting pipe 400.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

The applicant hereof has noticed that, during use of a battery, a battery cell generates heat. If the heat is unduly high, the heat will adversely affect the performance and service life of the battery. In the related art, a cooling system may be arranged to cool the battery cells in the battery. The cooling system may include a plurality of water cooling plates laid at the bottom of the battery box. The upper surfaces of the plurality of water cooling plates are in contact with the lower surfaces of the battery cells in the battery. During use, a cooling liquid such as water flows through the plurality of water cooling plates, thereby taking away the heat on the battery cells and cooling the battery cells.

However, the applicant hereof finds through research that the water cooling plate in the related art just contacts the battery cell at the bottom of the battery cell, and therefore, can only dissipate heat from the bottom of the battery cell. This will lead to the following two problems: First, the heat dissipation of the battery cell is insufficient, and the heat dissipation efficiency is low. Second, because only the bottom of the battery cell is cooled, the heat on the top of the battery cell is much greater than the heat at the bottom of the battery cell, the thermal expansion is uneven between the upper part and the lower part of the battery cell. This uneven thermal expansion may impair the performance of the battery.

In view of the above situation, in order to solve the problem of insufficient and uneven heat dissipation of the battery cell, the applicant hereof has designed a water cooling plate assembly after in-depth research. A liquid inlet and a liquid outlet of the water cooling plate assembly are both disposed on the two sides of the water cooling plate assembly in the thickness direction of the harmonica reed plate. When a plurality of water cooling plate assemblies are assembled to form a water cooling system, the plurality of water cooling plate assemblies are allowed to be assembled in parallel and at intervals by virtue of the unique positions of the liquid inlet and liquid outlet of each water cooling plate assembly. In this way, the battery cell containing an electrode assembly can be placed between two adj acent water cooling plate assemblies arranged in parallel and at intervals to cool both lateral faces of the battery cell (or cell). Such an arrangement can improve the cooling efficiency of the battery cells, and achieve a cooling effect that is balanced between the upper part and the lower part of the battery cells.

The battery disclosed in some embodiments of this application is applicable to, but not limited to, electrical devices such as a vehicle, watercraft, or aircraft. A power supply system of the electrical device may be formed by using the water cooling plate assembly, water cooling system, battery disclosed herein and the like, so as to improve the cooling effect for the battery cell and improve the performance stability and longevity of the battery.

An embodiment of this application provides an electrical device powered by a battery. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1 is used as an example of the electrical device according to an embodiment of this application.

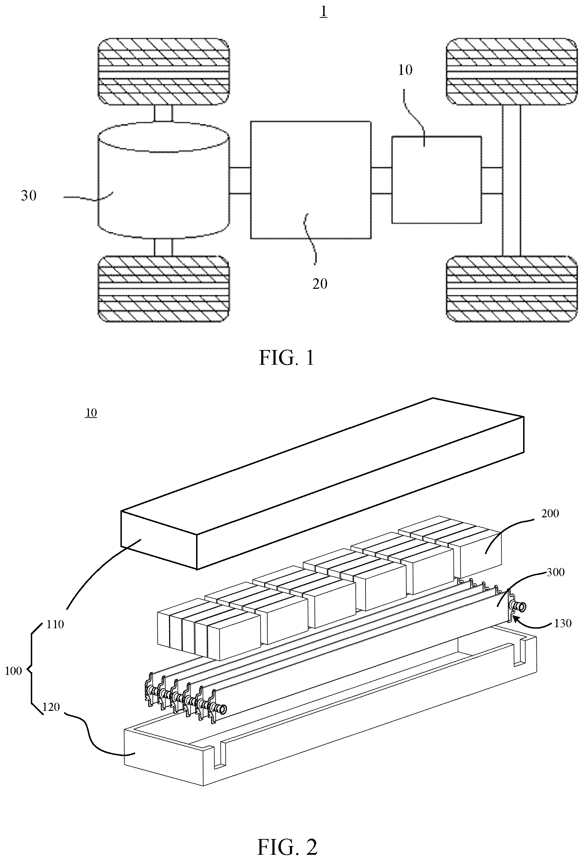

Referring to FIG. 1, FIG. 1 is a schematic structural diagram of a vehicle 1 according to some embodiments of this application. The vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A battery 10 is disposed inside the vehicle 1. The battery 10 may be disposed at the bottom, front, or rear of the vehicle 1. The battery 10 may be configured to supply power to the vehicle 1. For example, the battery 10 may serve as an operating power supply of the vehicle 1. The vehicle 1 may further include a controller 20 and a motor 30. The controller 20 is configured to control the battery 10 to supply power to the motor 30, for example, to meet electrical energy requirements in starting, navigating, or running the vehicle 1.

In some embodiments of this application, the battery 10 serves not only as an operating power supply of the vehicle 1, but may also serve as a driving power supply of the vehicle 1 to provide driving power for the vehicle 1 in place of or partly in place of fuel oil or natural gas.

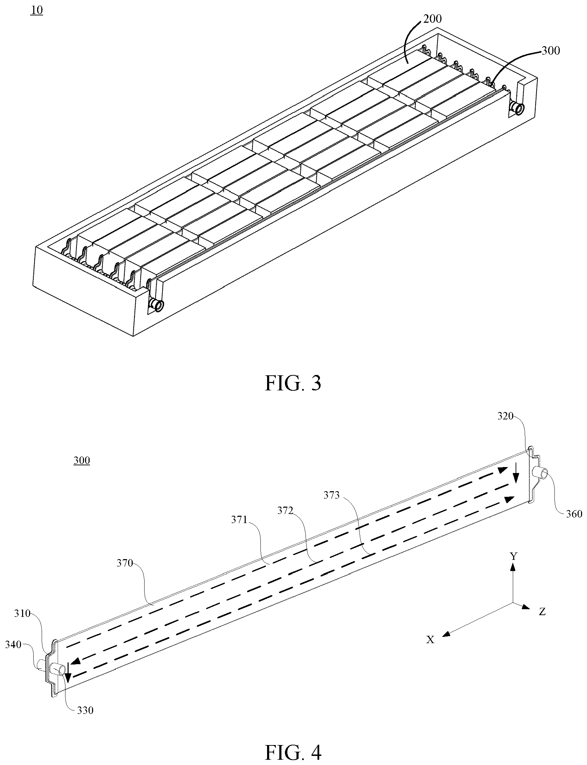

Referring to FIG. 2 and FIG. 3, FIG. 2 is an exploded view of a battery 10 according to some embodiments of this application, and FIG. 3 is a schematic assembling drawing of a battery 10 according to some embodiments of this application. The battery 10 includes a box 100 and a battery cell 200. The battery cell 200 is accommodated in the box 100. The box 100 is configured to provide an accommodation space for the battery cell 200. The box 100 may be in various structures. In some embodiments, the box 100 may include a first part 110 and a second part 120. The first part 110 and the second part 120 fit and cover each other. The first part 110 and the second part 120 together define an accommodation space configured to accommodate the battery cell 200. The second part 120 may be a hollow structure opened at one end. The first part 110 may be a plate-like structure. The first part 110 fits on an opening side of the second part 120 so that the first part 110 and the second part 120 together define the accommodation space. Alternatively, both the first part 110 and the second part 120 may be hollow structures opened at one side. The opening side of the first part 110 fits the opening side of the second part 120. Definitely, the box 100 formed by the first part 110 and the second part 120 may be in various shapes, such as a cylinder or a cuboid.

The battery 100 may contain a plurality of battery cells 200. The plurality of battery cells 200 may be connected in series, parallel, or series-and-parallel pattern. The series-and-parallel pattern means a combination of series connection and parallel connection of the plurality of battery cells 200. The plurality of battery cells 200 may be directly connected in series, parallel, or series-and-parallel pattern, and then the whole of the plurality of battery cells 200 may be accommodated in the box 10. Alternatively, the plurality of battery cells 200 may be connected in series, parallel, or series-and-parallel pattern to form a battery 100 in the form of battery modules first. A plurality of battery modules are then connected in series, parallel, or series-and-parallel pattern to form a whole for being accommodated in the box 10. The battery 100 may further include other structures. For example, the battery 100 may further include a busbar component. The busbar component is configured to implement electrical connection between the plurality of battery cells 200.

Each battery cell 200 may be, but is not limited to, a secondary battery or primary battery; or, may be a lithium-sulfur battery, a sodium-ion battery, or a magnesium-ion battery. The battery cell 200 may be in a shape such as a cylinder, a flat body, a cuboid, or other shapes.

This application provides a water cooling plate assembly 300 first. As shown in FIG. 4, FIG. 4 is a schematic structural diagram of a water cooling plate assembly 300 according to some embodiments of this application. The water cooling plate assembly 300 includes: a harmonica reed plate 370, a first current collector 310, and a second current collector 320. A plurality of cooling channels extending along a length direction of the harmonica reed plate 370 are formed inside the harmonica reed plate 370. The plurality of cooling channels are arranged in parallel along a width direction of the harmonica reed plate 370 so as to be available for being flowed through by a cooling liquid. The first current collector 310 is disposed at a first end of the harmonica reed plate 370 in the length direction. A first current collecting space communicating with a port at one end of the plurality of cooling channels is formed in the first current collector 310. A first liquid inlet 330 and a first liquid outlet 340 through which the cooling liquid flows into and out of the first collecting space respectively are formed on the first current collector 310 on two sides in a thickness direction of the harmonica reed plate 370 respectively. The second current collector 320 is disposed at a second end of the harmonica reed plate 370 in the length direction. The second end is opposite to the first end. A second current collecting space communicating with a port at another end of the plurality of cooling channels is formed in the second current collector. A second liquid inlet 350 and a second liquid outlet 360 through which the cooling liquid flows into and out of the second collecting space respectively are formed on the second current collector 320 on two sides in the thickness direction of the harmonica reed plate 370 respectively.

As shown in FIG. 4, the dimensions of the harmonica reed plate 370 include a length direction (illustrated by the X-axis direction in FIG. 4), a width direction (illustrated by Y-axis direction in FIG. 4), and a thickness direction (illustrated by the Z-axis direction in FIG. 4). A plurality of cooling channels are formed inside the harmonica reed plate 370. All the cooling channels extend along the X direction in the drawing. The plurality of cooling channels are arranged in the Y direction shown in the drawing. Two adjacent cooling channels are separated by a partition wall that also extends along the X direction. Each cooling channel includes two ports. The two ports face the first current collector 310 and the second current collector 320 respectively. Therefore, a plurality of ports of the cooling channels exist at both ends of the harmonica reed plate 370 in the length direction. The plurality of ports are separated from each other by the end of the partition wall inside the harmonica reed plate 370.

The first current collector 310 and the second current collector 320 are disposed at the first end and the second end of the harmonica reed plate 370 in the length direction respectively. The first current collector 310 includes a first housing. A first current collecting space is formed inside the first housing. The first housing is open on a side oriented toward the harmonica reed plate 370, so as to facilitate connection to the first end of the harmonica reed plate 370. Therefore, the ports of the harmonica reed plate 370 at one end of the plurality of cooling channels communicate with the first current collecting space. The second current collector 320 includes a second housing. A second current collecting space is formed inside the second housing. The second housing is open on a side oriented toward the harmonica reed plate 370, so as to facilitate connection to the second end of the harmonica reed plate 370. Therefore, the ports of the harmonica reed plate 370 at the other end of the plurality of cooling channels communicate with the second current collecting space. In some embodiments, the first current collector 310 and the second current collector 320 are of the same size and shape, and are bilaterally symmetrically arranged at the two ends in the length direction of the harmonica reed plate 370.

Both the liquid inlet and the liquid outlet of the water cooling plate assembly 300 are disposed on the two sides of the water cooling plate assembly 300 in the thickness direction of the harmonica reed plate 370. Therefore, when a plurality of water cooling plate assemblies 300 are assembled to form a water cooling system 130, the harmonica reed plates 370 of a plurality of water cooling plate assemblies 300 are allowed to be assembled in parallel and at intervals by virtue of the unique positions of the liquid inlet and liquid outlet of each water cooling plate assembly 300. In this way, the battery cell 200 can be placed between two adjacent water cooling plate assemblies 300 arranged in parallel and at intervals to cool both lateral faces of the battery cell 200. Such an arrangement can improve the cooling efficiency of the battery cells 200, and achieve a cooling effect that is balanced between the upper part and the lower part of the battery cells 200.

According to some embodiments of this application, the plurality of cooling channels form a plurality of cooling channel groups arranged along the width direction of the harmonica reed plate 370. Each of the plurality of cooling channel groups includes at least one cooling channel. The first current collector 310 includes a first spacer 313 disposed in the first current collecting space. The second current collector 320 includes a second spacer 323 disposed in the second current collecting space. The first spacer 313 and the second spacer 323 are configured to enable series connection of the plurality of cooling channel groups.

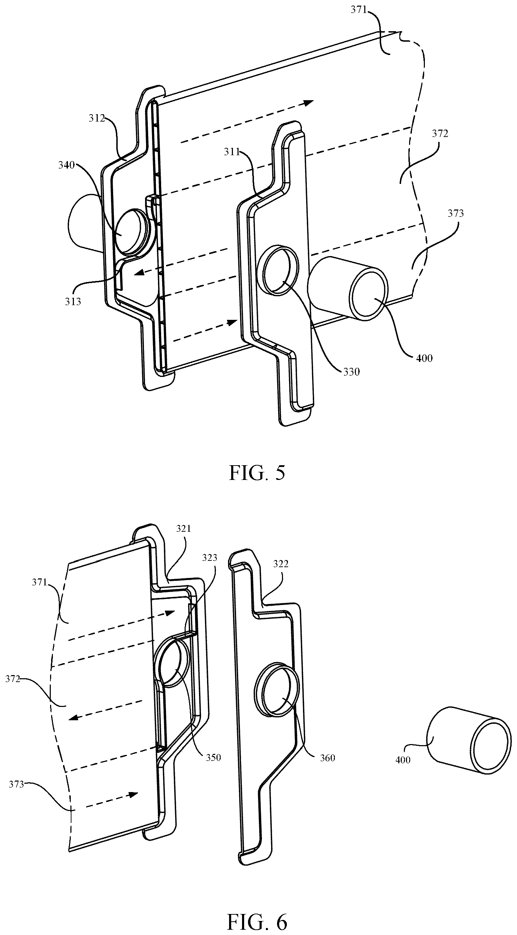

As shown in FIG. 5 and FIG. 6, FIG. 5 is a schematic structural diagram of an end of a first current collector 310 of a water cooling plate assembly 300 according to some embodiments of this application, and FIG. 6 is a schematic structural diagram of an end of a second current collector 320 of a water cooling plate assembly 300 according to some embodiments of this application. The plurality of cooling channels may include three cooling channel groups. Each cooling channel group may include an equal or unequal number of cooling channels. In FIG. 5 and

FIG. 6, the boundaries of the three cooling channel groups are shown by dashed lines in the drawings. In the illustrated embodiments, the cooling channels shown form three cooling channel groups. However, in other embodiments, the cooling channels may form more than three cooling channel groups, such as 5, 6, 8, or other numbers of cooling channel groups. The first spacer 313 and the second spacer 323 enable end-to-end connection of the ports of the three cooling channel groups, so as to form an S-shaped channel as a whole. As shown in FIG. 4 to FIG. 6, the flow path of the cooling liquid in the harmonica reed plate 370 may be represented by dashed arrows in the drawings. Understandably, in a case that there are more than three cooling channel groups, the series connection of a plurality of cooling channel groups may be implemented by setting the shapes of the first spacer 313 and the second spacer 323 and the positions thereof in the current collecting space. Understandably, over three cooling channel groups as a whole may form a channel that provides more round-trip paths than an S-shape, for example, form an M shape or even double S shape.

A plurality of cooling channel groups are connected in series. In this way, a plurality of cooling channels constitute a longer channel that provides a plurality of round-trip paths. Therefore, more time is available for the cooling liquid flowing through the harmonica reed plate 370 to exchange heat with the battery cells 200, thereby improving the heat dissipation efficiency. In the related art, the cooling liquid simply flows from the port at one end to the port at the other end of the plurality of cooling channels, thereby making the temperature of the cooling liquid at the port of the inflow end be relatively low because the cooling liquid has not yet exchanged heat with the battery cell 200. At the same time, the temperature of the cooling liquid at the port of the outflow end is relatively high. This will result in a large temperature difference between the two ends of the harmonica reed plate 370 in the length direction, thereby being unfavorable to balanced heat dissipation of the battery. In this embodiment, a plurality of cooling channel groups are connected in series to allow the cooling liquid to reciprocate repeatedly in the harmonica reed plate 370, so that the temperature is relatively balanced between the ports at the two ends of the harmonica reed plate 370.

According to some embodiments of this application, the plurality of cooling channel groups include a first cooling channel group 371, a second cooling channel group 372, and a third cooling channel group 373 arranged sequentially along the width direction of the harmonica reed plate 370. The first spacer 313 is configured to partition off a port of the first cooling channel group 371 from ports of other cooling channels among the plurality of cooling channels except the first cooling channel group 371; and the second spacer 323 is configured to partition off a port of the third cooling channel group 373 from ports of other cooling channels among the plurality of cooling channels except the third cooling channel group 373, so as to enable series connection of the first cooling channel group 371, the second cooling channel group 372, and the third cooling channel group 373.

Still referring to FIG. 4, a plurality of cooling channel groups include three cooling channel groups: a first cooling channel group 371, a second cooling channel group 372, and a third cooling channel group 373. The first cooling channel group 371 is located at the upper part of the harmonica reed plate 370, the second cooling channel group 372 is located at the middle part of the harmonica reed plate 370, and the third cooling channel group 373 is located at the lower part of the harmonica reed plate 370. The first cooling channel group 371, the second cooling channel group 372, the third cooling channel group 373 may include the same number of cooling channels. As shown in FIG. 5, in the first current collecting space, the first spacer 313 divides the space into two independent subspaces. One of the subspaces communicates with the port of the first cooling channel group 371, and the other subspace communicates with the ports of the second cooling channel group 372 and third cooling channel group 373. As shown in FIG. 6, in the second current collecting space, the second spacer 323 divides the space into two independent subspaces. One of the subspaces communicates with the ports of the first cooling channel group 371 and second cooling channel group 372, and the other subspace communicates with the port of the third cooling channel group 373. Such an arrangement allows the ports of the first cooling channel group 371, the second cooling channel group 372, and the third cooling channel group 373 to be connected end to end, thereby forming a series connection.

In this embodiment, three cooling channel groups are connected in series to allow the cooling liquid to reciprocate along an S-shaped route in the harmonica reed plate 370, so that the temperature is relatively balanced between the ports at the two ends of the harmonica reed plate 370.

According to some embodiments of this application, the first current collector 310 further includes: a first current collecting sheet 311 and a second current collecting sheet 312 arranged in parallel in a thickness direction of the harmonica reed plate 370. The first current collecting sheet 311 and the second current collecting sheet 312 are raised in two opposite directions respectively. The second current collector 320 further includes: a third current collecting sheet 321 and a fourth current collecting sheet 322 arranged in parallel in the thickness direction of the harmonica reed plate 370. The third current collecting sheet 321 and the fourth current collecting sheet 322 are raised in two opposite directions respectively. At least a part of edges of the first current collecting sheet 311 and the second current collecting sheet 312 are bonded together so that the raised parts of the first current collecting sheet and the second current collecting sheet define the first current collecting space. At least a part of edges of the third current collecting sheet 321 and the fourth collecting sheet 322 are bonded together so that the raised parts of the third current collecting sheet 321 and the fourth collecting sheet 322 define the second current collecting space.

As shown in FIG. 5 and FIG. 6, the first housing of the first current collector 310 is combined from a first current collecting sheet 311 and a second current collecting sheet 312. The middle region parts of the first current collecting sheet 311 and the second current collecting sheet 312 are raised in two opposite directions respectively, for example, raised toward the two sides of the harmonica reed plate 370 in the thickness direction, so that a recess is formed on opposite lateral faces of the first current collecting sheet 311 and second current collecting sheet 312 separately. The edge of the first current collecting sheet 311 and the edge of the second current collecting sheet 312 are bonded to form a first current collecting space between the two current collecting sheets, and the size of the first current collecting space is substantially the same as the thickness of the harmonica reed plate 370. The second housing of the second current collector 320 is combined from a third current collecting sheet 321 and a fourth current collecting sheet 322. The middle region parts of the third current collecting sheet 321 and the fourth current collecting sheet 322 are raised in two opposite directions respectively, for example, raised toward the two sides of the harmonica reed plate 370 in the thickness direction, so that a recess is formed on opposite lateral faces of the third current collecting sheet 321 and fourth current collecting sheet 322 separately. The edge of the third current collecting sheet 321 and the edge of the fourth current collecting sheet 322 are bonded to form a second current collecting space between the two current collecting sheets, and the size of the second current collecting space is substantially the same as the thickness of the harmonica reed plate 370.

The first current collecting sheet 310 and the second current collecting sheet 320 each are combined from two current collecting sheets. The raised part on the current collecting sheet may be formed by simple stamping. Therefore, the structures of the first current collecting sheet 310 and the second current collecting sheet 320 are relatively simple, and easy to manufacture.

In some embodiments, the first liquid inlet 330 and the first liquid outlet 340 are disposed on the first current collecting sheet 311 and the second current collecting sheet 312 respectively. The second liquid inlet 350 and the second liquid outlet 360 are disposed on the third current collecting sheet 321 and the fourth current collecting sheet 322 respectively.

The raised parts of the first current collecting sheet 311 and the second current collecting sheet 312 may form flat faces, so that it is convenient to create the first liquid inlet 330 and the first liquid outlet 340 on the raised part of the first current collecting sheet 311 and the raised part of the second current collecting sheet 312 respectively. The raised parts of the third current collecting sheet 321 and the fourth current collecting sheet 322 may also form flat faces, so that it is convenient to create the second liquid inlet 350 and the second liquid outlet 360 on the raised part of the third current collecting sheet 321 and the raised part of the fourth current collecting sheet 322 respectively.

With the first liquid inlet 330 and the first liquid outlet 340 being disposed on the first current collecting sheet 311 and the second current collecting sheet 312 respectively, it is convenient to align the first liquid inlet 330 and the first liquid outlet 340 in a height direction of the first current collector 310. Similarly, with the second liquid inlet 350 and the second liquid outlet 360 being disposed on the third current collecting sheet 321 and the fourth current collecting sheet 322 respectively, it is convenient to align the second liquid inlet 350 and the second liquid outlet 360 in a height direction of the second current collector 320.

In some embodiments, the projections of the first liquid inlet 330 and the first liquid outlet 340 on a reference plane coincide with each other. The reference plane is a plane parallel to two lateral faces of the harmonica reed plate 370 in the thickness direction. The projections of the second liquid inlet 350 and the second liquid outlet 360 on the reference plane also coincide with each other.

In some embodiments, as shown in FIG. 5 and FIG. 6, the projections of the first liquid inlet 330 and the first liquid outlet 340 on the reference plane coincide with each other, which means that the first liquid inlet 330 and the first liquid outlet 340 are arranged at the same level of height of the first current collector 310. The projections of the second liquid inlet 350 and the second liquid outlet 360 on the reference plane coincide with each other, which means that the second liquid inlet 350 and the second liquid outlet 360 are arranged at the same level of height of the second current collector 320. In some embodiments, the first liquid inlet 330, the first liquid outlet 340, the second liquid inlet 350, and the second liquid outlet 360 may be all disposed at a middle position in the height direction of the first current collector 310 or the second current collector 320.

In this way, when a plurality of water cooling plate assemblies 300 are assembled to form a water cooling system 130, the liquid inlets and the liquid outlets of the two adjacent water cooling plate assemblies 300 are at the same level of height, thereby facilitating connection between the two adjacent water cooling plate assemblies 300.

In some embodiments, at least a part of an edge of the first current collecting sheet 311 and at least a part of an edge of the second current collecting sheet 312 are bonded by welding. At least a part of an edge of the third current collecting sheet 321 and at least a part of an edge of the fourth current collecting sheet 322 are bonded by welding.

The welding achieves higher firmness of the bonding between the first current collecting sheet 311 and the second current collecting sheet 312 as well as the bonding between the third current collecting sheet 321 and the fourth current collecting sheet 322.

In some embodiments, at least a part of an edge of the first current collecting sheet 311 and at least a part of an edge of the second current collecting sheet 312 are bonded by snap-fitting. At least a part of an edge of the third current collecting sheet 321 and at least a part of an edge of the fourth current collecting sheet 322 are bonded by snap-fitting.

The snap-fit bonding facilitates fast and simple bonding between the first current collecting sheet 311 and the second current collecting sheet 312, and between the third current collecting sheet 321 and the fourth current collecting sheet 322.

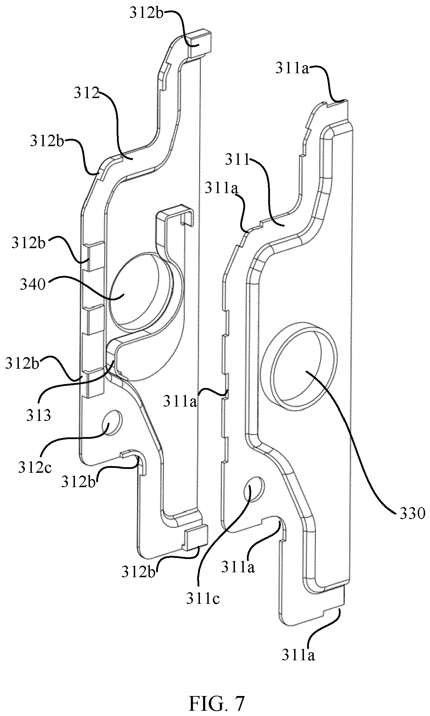

According to some embodiments of this application, as shown in FIG. 7, FIG. 7 is a schematic exploded view of a first current collector 310 of a water cooling plate assembly 300 according to some embodiments of this application. A plurality of first snap slots 311a are disposed at the edge of the first current collecting sheet 311. A plurality of first buckles 312b are disposed in corresponding positions at the edge of the second current collecting sheet 312. The first snap slots 311a and the corresponding first buckles 312b are mated to implement snap-bonding between the first current collecting sheet 311 and the second current collecting sheet 312. A plurality of second snap slots (not shown in the drawing) are disposed at the edge of the third current collecting sheet 321. A plurality of second buckles (not shown in the drawings) are disposed in corresponding positions at the edge of the fourth current collecting sheet 322. The second snap slots and the corresponding second buckles are mated to implement snap-bonding between the third current collecting sheet 321 and the fourth current collecting sheet 322.

As shown in FIG. 7, a first snap slot 311a is disposed in a plurality of corner positions at the edge of the first current collecting sheet 311, and three other first snap slots 311a are disposed in a vertical edge section of the first current collecting sheet 311. A plurality of first buckles 312b are disposed at the corresponding positions at the edge of the second current collecting sheet 312. The buckles may be in the form of claws, for example. In this way, when the first current collecting sheet 311 and the second current collecting sheet 312 are combined, the claw of the first buckle 312b grips the outer side of the second current collecting sheet 312. The positions and working principles of the second buckle and the second snap slot are similar to those of the first buckle 312b and the first snap slot 311a, the details of which are omitted herein.

The plurality of first buckles 312b and first snap slots 311a as well as the plurality of second buckles and second snap slots increase the connection strength between the current collecting sheets. At the same time, the buckles and snap slots disposed at the corresponding positions of the two current collecting sheets facilitate alignment between the two current collecting sheets.

According to some embodiments of this application, a positioning portion is disposed on one or more of the first current collecting sheet 311, the second current collecting sheet 312, the third current collecting sheet 321, or the fourth current collecting sheet 322, and is configured to align the water cooling plate assembly 300 with other water cooling plate assemblies 300 during mounting of the water cooling plate assembly 300.

As shown in FIG. 7, the positioning portion may include a first positioning hole 311c created on the first current collecting sheet 311 of the first current collector 310 and a second positioning hole 312c created on the second current collecting sheet 312. When the first current collecting sheet 311 and the second current collecting sheet 312 are combined, the first positioning hole 311c is aligned with the second positioning hole 312c. In addition, in assembling a plurality of water cooling plate assemblies 300, the plurality of water cooling plate assemblies 300 may be aligned with each other in the height direction (that is, the Y direction shown in FIG. 4) with reference to the positioning portion of each water cooling plate assembly 300. Although in this embodiment, the positioning portion is disposed on the first current collector 310, in some other embodiments, the positioning portion may be disposed on the second current collector 320 instead, or disposed on both the first current collector 310 and the second current collector 320.

In a case that the first current collector 310 includes a first spacer 313 disposed in the first current collecting space and the plurality of cooling channel groups include a first cooling channel group 371, a second cooling channel group 372, and a third cooling channel group 373 arranged sequentially along the width direction of the harmonica reed plate 370, the first spacer 313 further includes: a first connecting section 313a, a first arc-shaped section 313b, and a second connecting section 313c. The first connecting section 313a extends along at least a part of the edges of the first current collecting sheet 311 and the second current collecting sheet 312 and fixed to an inner side of the edges of the first current collecting sheet 311 and the second current collecting sheet 312. The first arc-shaped section 313b extends along at least a part of the edges of the first liquid inlet 330 and the first liquid outlet 340 to avoid the first liquid inlet 330 and the first liquid outlet 340. The second connecting section 313c is connected to an edge of the first end of the harmonica reed plate 370, and fixed between a port of the first cooling channel group 371 and a port of the second cooling channel group 372.

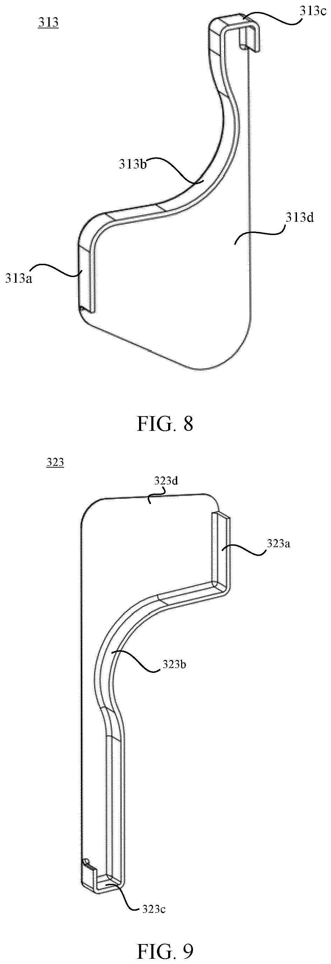

FIG. 8 is a schematic structural diagram of a first spacer 313 according to some embodiments of this application, and FIG. 9 is a schematic structural diagram of a second spacer 323 according to some embodiments of this application. As shown in FIG. 5 and FIG. 8, the first spacer 313 includes a first main portion 313d and a first flange formed on at least a part of the edge of the first main portion 313d. The first main portion 313d is a planar sheet structure that closely fits the second current collecting sheet 312. For example, the first main portion 313d may be fixed to the inner side of the second current collecting sheet 312 by welding. The first flange protrudes toward the first current collecting sheet 311. After the first current collecting sheet 311 and the second current collecting sheet 312 are combined, the upper edge of the first flange contacts the inner side of the first current collecting sheet 311. Therefore, the first flange serves to divide the first current collecting space into two subspaces. The first flange includes a first connecting section 313a, a first arc-shaped section 313b, and a second connecting section 313c. One end of the first connecting section 313a abuts against the inner side of the edges of the first current collecting sheet 311 and the second current collecting sheet 312. The first arc-shaped section 313b coincides with at least a part of the edge of the first liquid outlet 340, so that the cooling liquid is not blocked from entering and exiting the first current collecting space. One end of the second connecting section 313c is connected to a partition wall between the port of the first cooling channel group 371 and the port of the second cooling channel group 372 in the harmonica reed plate 370, so as to separate the two cooling channel groups.

A part of the first spacer 313 is designed as an extending structure that includes three sections, thereby effectively partitioning the first current collecting space into two independent sub-spaces, and avoiding obstruction of the cooling liquid entering and exiting the first current collecting space.

In a case that the second current collector 320 includes a second spacer 323 disposed in the second current collecting space and the plurality of cooling channel groups include a first cooling channel group 371, a second cooling channel group 372, and a third cooling channel group 373 arranged sequentially along the width direction of the harmonica reed plate 370, the second spacer 323 further includes: a third connecting section 323a, a second arc-shaped section 323b, and a fourth connecting section 323c. The third connecting section 323a extends along at least a part of the edges of the third current collecting sheet 321 and the fourth current collecting sheet 322 and fixed to an inner side of the edges of the third current collecting sheet 321 and the fourth current collecting sheet 322. The second arc-shaped section 323b extends along at least a part of the edges of the second liquid inlet 350 and the second liquid outlet 360 to avoid the second liquid inlet 350 and the second liquid outlet 360. The fourth connecting section 323c is connected to an edge of the second end of the harmonica reed plate 370, and fixed between a port of the third cooling channel group 373 and a port of the second cooling channel group 372.

As shown in FIG. 6 and FIG. 9, the second spacer 323 includes a second main portion 323d and a second flange formed on at least a part of the edge of the second main portion 323d. The second main portion 323d is a planar sheet structure that closely fits the third current collecting sheet 321. For example, the second main portion 323d may be fixed to the inner side of the third current collecting sheet 321 by welding. The second flange protrudes toward the fourth current collecting sheet 322. After the third current collecting sheet 321 and the fourth current collecting sheet 322 are combined, the upper edge of the second flange contacts the inner side of the fourth current collecting sheet 322. Therefore, the second flange serves to divide the second current collecting space into two subspaces. The second flange includes a third connecting section 323a, a second arc-shaped section 323b, and a fourth connecting section 323c. One end of the third connecting section 323a abuts against the inner side of the edges of the third current collecting sheet 321 and the fourth current collecting sheet 322. The second arc-shaped section 323b coincides with at least a part of the edge of the second liquid inlet 350, so that the cooling liquid is not blocked from entering and exiting the second current collecting space. One end of the fourth connecting section 323c is connected to a partition wall between the port of the second cooling channel group 372 and the port of the third cooling channel group 373 in the harmonica reed plate 370, so as to separate the two cooling channel groups.

A part of the second spacer 323 is designed as an extending structure that includes three sections, thereby effectively partitioning the second current collecting space into two independent sub-spaces, and avoiding obstruction of the cooling liquid entering and exiting the second current collecting space.

This application further provides a water cooling system 130. Referring back to FIG. 2, the water cooling system 130 includes the plurality of water cooling plate assemblies 300. The plurality of water cooling plate assemblies 300 are arranged in parallel at intervals. For any two adjacent water cooling plate assemblies 300 among the plurality of water cooling plate assemblies 300: the first liquid inlet 330 and the second liquid outlet 360 of one water cooling plate assembly 300 among the two adjacent water cooling plate assemblies 300 communicate with the first liquid outlet 340 and the second liquid inlet 350 of the other water cooling plate assembly 300 respectively to implement connection between the two adjacent water cooling plate assemblies 300.

The water cooling system 130 includes a plurality of water cooling plate assemblies 300, for example, as shown in FIG. 2, includes 6 water cooling plate assemblies 300. However, in some other embodiments, the water cooling system 130 may include more than 6 or less than 6 water cooling plate assemblies 300 instead. The first liquid inlets 330 of the first row of water cooling plate assemblies 300 (the frontmost water cooling plate assemblies 300 shown in FIG. 2) constitute a main liquid inlet of the entire water cooling system 130. The second liquid outlets 360 of the first row of water cooling plate assemblies constitute a main liquid outlet of the entire water cooling system 130. For any water cooling plate assembly 300 in the middle rows of water cooling plate assemblies 300, the first liquid inlet 330 of the water cooling plate assembly is connected to the first liquid outlet 340 of the previous water cooling plate assembly 300. The first liquid outlet 340 of the water cooling plate assembly is connected to the first liquid inlet 330 of the next water cooling plate assembly 300. The second liquid inlet 350 of the water cooling plate assembly is connected to the second liquid outlet 360 of the next water cooling plate assembly 300. The second liquid outlet 360 of the water cooling plate assembly is connected to the second liquid inlet 350 of the previous water cooling plate assembly 300. The first liquid outlets 340 and the second liquid inlets 350 of the last row of water cooling plate assemblies 300 are sealed up. This arrangement enables the water cooling system 130 to form a cooling liquid circulation system. The cooling liquid enters the system from the first liquid inlet 330 of the first row of water cooling plate assemblies 300 of the water cooling system 130, and then reaches the first current collecting space of multiple rows of water cooling plate assemblies 300. For each water cooling plate assembly 300, the cooling liquid flows from the first current collecting space of the water cooling plate assembly to the second current collecting space through the cooling channel of the harmonica reed plate 370. Finally, the cooling liquid converges in the second current collecting space of the multiple rows water cooling plate assemblies 300, and ultimately flows out of the second liquid outlet 360 of the first row of water cooling plate assemblies 300. The cooling liquid that flows out can be cooled by a cooling device outside the battery, and then input again into the first liquid inlet 330 of the first row of water cooling plate assemblies 300.

In the water cooling system 130 of this embodiment, a cooling liquid circulation system is formed by connecting a plurality of water cooling plate assemblies 300, thereby facilitating the circulation of the cooling liquid in the system.

In some embodiments, as shown in FIG. 5 and FIG. 6, the water cooling system 130 further includes a plurality of connecting pipes 400. Each connecting pipe 400 among the plurality of connecting pipes 400 is configured to communicate the first liquid inlets 330 and the first liquid outlets 340 of two adjacent water cooling plate assemblies 300, or configured to communicate the second liquid inlets 350 and the second liquid outlets 360 of two adjacent water cooling plate assemblies 300. The first liquid inlet 330, the second liquid inlet 350, the first liquid outlet 340, and the second liquid outlet 360 of each water cooling plate assembly 300 of the water cooling system 130 form a flange protruding toward the outside of the water cooling plate assembly 300. The flange is inserted into a corresponding connecting pipe 400 to implement connection between the first liquid inlet 330, the second liquid inlet 350, the first liquid outlet 340, or the second liquid outlet 360 and the connecting pipe 400.

The connecting pipe 400 connects the liquid inlets and outlets of the two adjacent water cooling plate assemblies 300, thereby increasing the connection strength between the water cooling plate assemblies 300, and also ensuring that a clearance between the adjacent water cooling plate assemblies 300 is available for accommodating the battery cells 200.

Another aspect of this application further provides a battery box 100. The box 100 is configured to accommodate a battery cell 200. As shown in FIG. 2, the box 100 includes the water cooling system 130 in addition to the first part 110 and the second part 120. The water cooling plate assembly 300 in the water cooling system 130 abuts against the battery cell 200 to cool the battery cell 200. Referring to FIG. 3, in some embodiments, the water cooling plate assembly 300 may be a part of the box 100 and fixed to the interior of the box 100.

According to one aspect of this application, a battery 10 is further provided. The battery 10 includes: a battery cell 200 and the box 100. The box 100 is configured to accommodate the battery cell 200.

According to an aspect of this application, a battery 10 is further provided. The battery 10 includes: the water cooling system 130 and a plurality of battery cells 200. At least some battery cells 200 among the plurality of battery cells 200 are disposed in a clearance between two adjacent water cooling plate assemblies 300 of the water cooling system 130. Two opposite lateral faces of each battery cell 200 among the at least some battery cells 200 abut against the harmonica reed plates 370 of the two adjacent water cooling plate assemblies 300 respectively, so that the water cooling system 130 cools the two opposite lateral faces of each battery cell 200.

In the battery of this embodiment, the two adjacent water cooling plate assemblies 300 of the water cooling system 130 can cool the two opposite lateral faces of each battery cell 200 respectively, thereby improving the cooling efficiency for the battery cells 200, and also achieving a cooling effect that is balanced between the upper part and the lower part of the battery cells 200.

According to one aspect of this application, an electrical device 1 is further provided. The battery 10 is configured to provide electrical energy for the electrical device 1. The specific structure of the electrical device 1 may be learned by reference to the description about FIG. 1, the details of which are omitted here.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A water cooling plate assembly, comprising:
a harmonica reed plate, wherein a plurality of cooling channels extending along a length direction of the harmonica reed plate are formed inside the harmonica reed plate, and the plurality of cooling channels are arranged in parallel along a width direction of the harmonica reed plate so as to be available for being flowed through by a cooling liquid;
a first current collector, disposed at a first end of the harmonica reed plate in the length direction, wherein a first current collecting space communicating with a port at one end of the plurality of cooling channels is formed in the first current collector, and a first liquid inlet and a first liquid outlet through which the cooling liquid flows into and out of the first collecting space respectively are formed on the first current collector on two sides in a thickness direction of the harmonica reed plate respectively; and
a second current collector, disposed at a second end of the harmonica reed plate in the length direction, wherein the second end is opposite to the first end, a second current collecting space communicating with a port at another end of the plurality of cooling channels is formed in the second current collector, and a second liquid inlet and a second liquid outlet through which the cooling liquid flows into and out of the second collecting space respectively are formed on the second current collector on two sides in the thickness direction of the harmonica reed plate respectively.

2. The water cooling plate assembly according to claim 1, wherein the plurality of cooling channels form a plurality of cooling channel groups arranged along the width direction of the harmonica reed plate, and each of the plurality of cooling channel groups comprises at least one cooling channel; and
the first current collector comprises a first spacer disposed in the first current collecting space, the second current collector comprises a second spacer disposed in the second current collecting space, and the first spacer and the second spacer are configured to enable series connection of the plurality of cooling channel groups.

3. The water cooling plate assembly according to claim 2, wherein the plurality of cooling channel groups comprise a first cooling channel group, a second cooling channel group, and a third cooling channel group arranged sequentially along the width direction of the harmonica reed plate; and
the first spacer is configured to partition off a port of the first cooling channel group from ports of other cooling channels among the plurality of cooling channels except the first cooling channel group; and the second spacer is configured to partition off a port of the third cooling channel group from ports of other cooling channels among the plurality of cooling channels except the third cooling channel group, so as to enable series connection of the first cooling channel group, the second cooling channel group, and the third cooling channel group.

4. The water cooling plate assembly according to any one of claims 1 to 3, wherein
the first current collector further comprises: a first current collecting sheet and a second current collecting sheet arranged in parallel in a thickness direction of the harmonica reed plate, and the first current collecting sheet and the second current collecting sheet are raised in two opposite directions respectively;
the second current collector further comprises: a third current collecting sheet and a fourth current collecting sheet arranged in parallel in the thickness direction of the harmonica reed plate, and the third current collecting sheet and the fourth current collecting sheet are raised in two opposite directions respectively; and
at least a part of edges of the first current collecting sheet and the second current collecting sheet are bonded together so that raised parts of the first current collecting sheet and the second current collecting sheet define the first current collecting space, and at least a part of edges of the third current collecting sheet and the fourth collecting sheet are bonded together so that raised parts of the third current collecting sheet and the fourth collecting sheet define the second current collecting space.

5. The water cooling plate assembly according to claim 4, wherein
the first liquid inlet and the first liquid outlet are disposed on the first current collecting sheet and the second current collecting sheet respectively; and
the second liquid inlet and the second liquid outlet are disposed on the third current collecting sheet and the fourth current collecting sheet respectively.

6. The water cooling plate assembly according to claim 4 or 5, wherein
projections of the first liquid inlet and the first liquid outlet on a reference plane coincide with each other, wherein the reference plane is a plane parallel to two lateral faces of the harmonica reed plate in the thickness direction; and
projections of the second liquid inlet and the second liquid outlet on the reference plane coincide with each other.

7. The water cooling plate assembly according to claim 4 or 5, wherein
at least a part of an edge of the first current collecting sheet and at least a part of an edge of the second current collecting sheet are bonded by welding; and
at least a part of an edge of the third current collecting sheet and at least a part of an edge of the fourth current collecting sheet are bonded by welding.

8. The water cooling plate assembly according to claim 4 or 5, wherein
at least a part of an edge of the first current collecting sheet and at least a part of an edge of the second current collecting sheet are bonded by snap-fitting; and
at least a part of an edge of the third current collecting sheet and at least a part of an edge of the fourth current collecting sheet are bonded by snap-fitting.

9. The water cooling plate assembly according to claim 8, wherein
a plurality of first snap slots are disposed at the edge of the first current collecting sheet, a plurality of first buckles are disposed in corresponding positions at the edge of the second current collecting sheet, and the first snap slots and the corresponding first buckles are mated to implement snap-bonding between the first current collecting sheet and the second current collecting sheet; and
a plurality of second snap slots are disposed at the edge of the third current collecting sheet, a plurality of second buckles are disposed in corresponding positions at the edge of the fourth current collecting sheet, and the second snap slots and the corresponding second buckles are mated to implement snap-bonding between the third current collecting sheet and the fourth current collecting sheet.

10. The water cooling plate assembly according to any one of claims 4 to 9, wherein
a positioning portion is disposed on one or more of the first current collecting sheet, the second current collecting sheet, the third current collecting sheet, or the fourth current collecting sheet, and is configured to align the water cooling plate assembly with other water cooling plate assemblies during mounting of the water cooling plate assembly.

11. The water cooling plate assembly according to any one of claims 4 to 10, wherein, in a case that the first current collector comprises a first spacer disposed in the first current collecting space and the plurality of cooling channel groups comprise a first cooling channel group, a second cooling channel group, and a third cooling channel group arranged sequentially along the width direction of the harmonica reed plate, the first spacer further comprises:
a first connecting section, extending along at least a part of the edges of the first current collecting sheet and the second current collecting sheet and fixed to an inner side of the edges of the first current collecting sheet and the second current collecting sheet;
a first arc-shaped section, extending along at least a part of the edges of the first liquid inlet and the first liquid outlet to avoid the first liquid inlet and the first liquid outlet; and
a second connecting section, connected to an edge of the first end of the harmonica reed plate, and fixed between a port of the first cooling channel group and a port of the second cooling channel group.

12. The water cooling plate assembly according to any one of claims 4 to 11, wherein, in a case that the second current collector comprises a second spacer disposed in the second current collecting space and the plurality of cooling channel groups comprise a first cooling channel group, a second cooling channel group, and a third cooling channel group arranged sequentially along the width direction of the harmonica reed plate, the second spacer further comprises:
a third connecting section, extending along at least a part of the edges of the third current collecting sheet and the fourth current collecting sheet and fixed to an inner side of the edges of the third current collecting sheet and the fourth current collecting sheet;
a second arc-shaped section, extending along at least a part of the edges of the second liquid inlet and the second liquid outlet to avoid the second liquid inlet and the second liquid outlet; and
a fourth connecting section, connected to an edge of the second end of the harmonica reed plate, and fixed between a port of the third cooling channel group and a port of the second cooling channel group.

13. A water cooling system, comprising a plurality of water cooling plate assemblies according to any one of claims 1 to 12, wherein the plurality of water cooling plate assemblies are arranged in parallel at intervals, and, for any two adjacent water cooling plate assemblies among the plurality of water cooling plate assemblies:
the first liquid inlet and the second liquid outlet of one of the two adjacent water cooling plate assemblies communicate with the first liquid outlet and the second liquid inlet of the other water cooling plate assembly respectively to implement connection between the two adjacent water cooling plate assemblies.

14. The water cooling system according to claim 13, further comprising:
a plurality of connecting pipes, wherein each of the plurality of connecting pipes is configured to communicate the first liquid inlets and the first liquid outlets of two adjacent water cooling plate assemblies, or configured to communicate the second liquid inlets and the second liquid outlets of two adjacent water cooling plate assemblies; and
the first liquid inlet, the second liquid inlet, the first liquid outlet, and the second liquid outlet of each water cooling plate assembly of the water cooling system form a flange protruding toward the outside of the water cooling plate assembly, and the flange is inserted into a corresponding connecting pipe to implement connection between the first liquid inlet, the second liquid inlet, the first liquid outlet, or the second liquid outlet and the connecting pipe.

15. A battery box, wherein the box is configured to accommodate a battery cell and comprises the water cooling plate assembly according to any one of claims 1 to 12, and the water cooling plate assembly abuts the battery cell to cool the battery cell.

16. A battery, comprising:
a battery cell; and
the battery box according to claim 15, wherein the box is configured to accommodate the battery cell.

17. A battery, comprising:
the water cooling system according to claim 13 or 14; and
a plurality of battery cells, wherein at least some battery cells among the plurality of battery cells are disposed in a clearance between two adjacent water cooling plate assemblies of the water cooling system, wherein
two opposite lateral faces of each battery cell among the at least some battery cells abut against the harmonica reed plates of the two adjacent water cooling plate assemblies respectively, so that the water cooling system cools the two opposite lateral faces of each battery cell.

18. An electrical device, comprising any one of the batteries according to claim 16 or 17, wherein the battery is configured to provide electrical energy for the electrical device.
